# EUROPEAN PATENT SPECIFICATION

(11) **EP 0 763 761 B1**
(45) Date of publication and mention of the grant of the patent: **30.01.2002**
(21) Application number: 95936111.4
(22) Date of filing: 07.11.1995
(51) Int. Cl.: G02B 7/12, G02B 27/02, G02B 27/01, G02B 27/22

(54) **PICTURE DISPLAY HAVING DISPLAY SECTIONS FOR BOTH EYES**
BILDANZEIGEVORRICHTUNG MIT ANZEIGETEILEN FÜR BEIDE AUGEN
DISPOSITIF DE VISUALISATION D'IMAGES PRESENTANT DES SECTIONS DE VISUALISATION POUR LES DEUX YEUX

(30) Priority: 08.11.1994 JP 27404494
(43) Date of publication of application: 19.03.1997
(73) Proprietor: Nintendo Co., Limited, Kyoto-shi, Kyoto (JP)
(72) Inventor: SHIMAZU, Yoshihiro, Chofu-shi Tokyo 182 (JP)
(74) Representative: Jones, David Colin
(86) International application number: JP9502270
(87) International publication number: WO9614598

(56) References cited:
- EP-A- 0 344 881
- WO-A-93/23783
- JP-A- 5 192 448
- JP-A- 6 123 852
- JP-A- 6 141 264
- JP-A- 6 242 394
- JP-A- 6 331 928

## Description

### FIELD OF ART

The present invention relates to a picture display apparatus having display units for both eyes. More specifically, the present invention relates to an adjustment of an interval between two compact optical display units symmetrically arranged for left and right eyes of a viewer, and focusing of the display units.

### PRIOR ART

As such a kind of picture display apparatus having a compact optical display unit, a prior art disclosed in Japanese Patent Application Laying-Open No. 2-42476 (Japanese Patent Application No. 63-187929) is known. The prior art comprises a plurality of light-emitting elements arranged in a predetermined format, a lens unit which forms an enlarged virtual image of a light image formed by the light-emitting elements, a mirror on which a reflected image of the enlarged virtual image can be viewed, a means for reciprocally moving the mirror in a predetermined range, and a means for selectively driving the light-emitting elements, wherein by controlling a timing for driving the light-emitting elements and a timing for reciprocally moving the mirror, a two-dimensional enlarged virtual image is transmitted to an eye of the viewer.

As an applicable example of such the picture display apparatus, as disclosed in Japanese Patent Application Laying-Open No. 2-63379 (Japanese Patent Application No. 1-122703), an apparatus which can be mounted onto a head portion of the viewer is known.

The picture display apparatus of the prior art is compact and light-weight, but in almost cases, the apparatus is mainly used for one eye. Furthermore, by changing a distance between the light-emitting elements and the lens unit for each viewer, it is possible to perform focusing.

It will be considered that by combining a pair of display units each being disclosed in the prior art, a picture can be viewed by both eyes; however, in such a case, since an interval between the both eyes varies for each viewer, it is necessary to adjust an interval between the display units for left and right eyes. Furthermore, it is also necessary to perform the focusing of each of the display units. In such a case, it is convenient if the focusing of the display units can be simultaneously performed for left and right eyes by a one-time operation.

### SUMMARY OF THE INVENTION

Therefore, a principal object of the present invention is to provide a novel picture display apparatus having display units for both eyes.

Another object of the present invention is to provide a picture display apparatus having display units for both eyes, in which it is possible to adjust an interval between the display units for both eyes according to an interval between both eyes of a viewer.

Another object of the present invention is to provide a picture display apparatus having display units for both eyes, in which it is possible to simultaneously perform the focusing of the display units for both eyes.

Another object of the present invention is to provide a picture display apparatus having display units for both eyes, in which it is possible to perform an interval adjustment and the focusing with no mutual influence.

The present invention is a picture display apparatus as set out in claim 1.

In the present invention, since the left display unit and the right display unit are symmetrically arranged within the chassis, if the display units are set at positions of both eyes of a viewer, the viewer can view a picture by the both eyes.

The picture display apparatus is further provided with an interval adjustment mechanism, and if a knob which is rotatably attached on an upper surface of an upper chassis, left and right links coupled to the knob are symmetrically moved in left and right directions, respectively, and therefore, the display units for both eyes engaged with the links are closed to each other or separated from each other, and accordingly, it is possible to make an interval between the display units to be coincident with an interval between the both eyes of the viewer.

The picture display apparatus is further provided with a focusing mechanism, and when a lever provided on the upper surface of the upper chassis is rotated, rotors are rotated in front and rear directions via left and right universal joints, and therefore, since focusing pins engaged with cam grooves are depressed, the lens units of the display units for both eyes are symmetrically moved in left and right directions, respectively, and accordingly, the focusing of the display units can be simultaneously performed.

At this time, the universal joints are rotated in the front and rear directions together with the lever while the universal joints are expansible and collapsible in the left and right directions, the focusing is not affected by other operations such as the interval adjustment of the display units for both eyes and etc.

Furthermore, knurled portions are formed in respective one end portions of the universal joints, and the lever is formed with holes capable of fitting the knurled portions. Then, if the universal joints are fit into the holes of the lever in a manner that the universal joints are deviated from the lever in a circumferential direction, rotation positions of the left and right rotors in the front and rear directions are different from each other, and therefore, positions of the focusing pins being engaged with the cam grooves are moved, and accordingly, distances between the lens units and substrates in the display units become to be different from each other at left and right. Therefore, it is possible to easily solve an imbalance of the focusing for the lens units due to a dimensional tolerance in manufacturing components, for example.

In accordance with the present invention, since the display units being symmetrically arranged for left and right eyes are viewed by left and right eye of a viewer, in comparison with a prior art apparatus in which the display unit is viewed by one eye, not only fatigue of the eyes of the viewer can be reduced but also a force or power of a picture being displayed is remarkably increased. Furthermore, if an image for left eye and an image for right eye are individually displayed by the left display unit and the right display unit, a three-dimensional picture with deepness can be viewed.

Furthermore, it is possible to make the interval between the display units to be coincident with the interval between the both eyes of the viewer by the interval adjustment mechanism, and the focusing of the display units can be simultaneously performed by the focusing mechanism.

In addition, the focusing lever and the pins of the lens units are connected to each other via the universal joints which are expansible and collapsible in the left and right directions, and therefore, the focusing is not affected by influence of other operations such as the interval adjustment operation and etc.

Furthermore, since the universal joints can be connected to the lever with being deviated in the circumferential direction, it is possible to differ the distances of the lens unit with respect to the light-emitting elements, i.e. the substrates in the left display unit and the right display unit, and accordingly, it is possible to balance the focusing of the left display unit and the right display unit.

Thus, according to the present invention, it is possible to independently and extremely easily and rapidly perform the interval adjustment and the focusing of the left display unit and the right display unit, and therefore, it is possible to increase an operability of the picture display apparatus.

The above described objects and other objects, features, aspects and advantages of the present invention will become more apparent from the following detailed description of the present invention when taken in conjunction with the accompanying drawings.

### BRIEF DESCRIPTION OF THE DRAWINGS

Figure 1 is a partly cutaway front view showing a picture display apparatus having display units for both eyes, being one embodiment according to the present invention, while a case is detached;
Figure 2 is a top plan view showing Figure 1 embodiment while the case is detached;
Figure 3 is a partly cutaway left side view showing Figure 1 embodiment while the case is detached;
Figure 4 is a perspective view showing a major portion of a guide portion at a left side;
Figure 5 is a top plan view showing a major portion of left and right links;
Figure 6 is a sectional view at X-X line in Figure 5;
Figure 7 is a top plan view showing the major portion of the left and right links in a collapsed state;
Figure 8 is a top plan view showing the major portion of the left and right links in an expanded state;
Figure 9 is a top plan view showing a major portion of a universal joint at a left side;
Figure 10 is a partly cutaway front view of Figure 9;
Figure 11 is a top plan view showing a major portion of the universal joint at the left side in performing a focusing operation;
Figure 12 is a partly cutaway front view of Figure 11; and
Figure 13 is an exploded top view showing left and right universal joints.

### BEST MODE FOR EMBODYING THE INVENTION

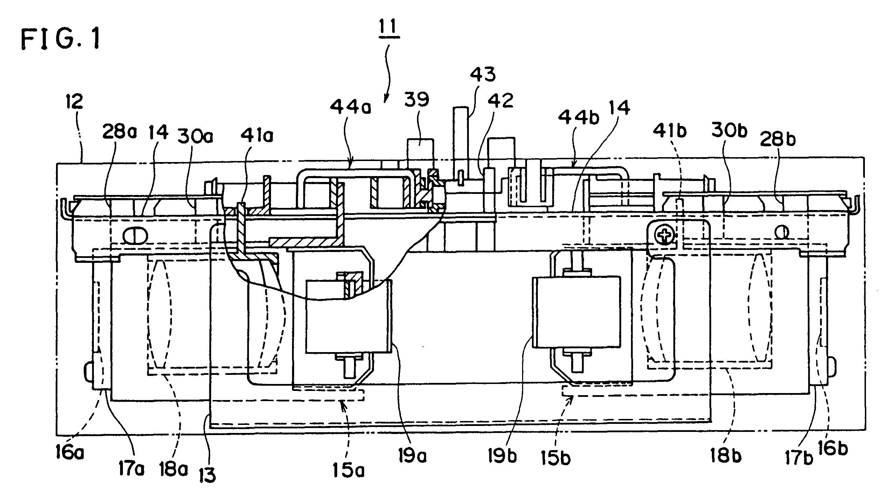

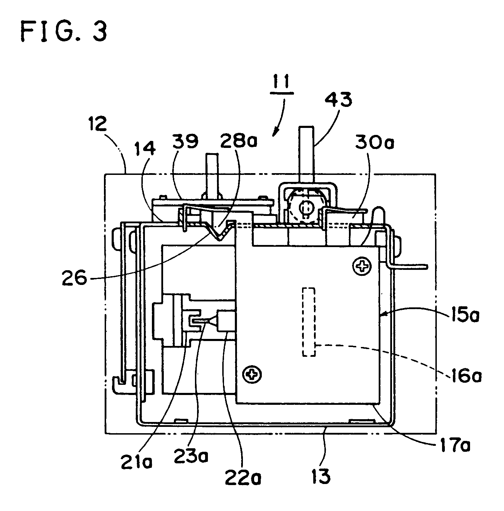

With referring to Figure 1 to Figure 3, a picture display apparatus 11 of this embodiment includes a case 12 shown by a two-dotted line, and the case 12 is made of a synthetic resin, for example. A lower chassis 13 and an upper chassis 14 are contained in the case 12 in a state where the both chassis are combined with each other in a box fashion, and between the lower chassis 13 and the upper chassis 14, a left display unit 15a and a right display unit 15b are symmetrically arranged.

Noting the left display unit 15a, an LED (Light-Emitting Diode) array 16a which includes a plurality of light-emitting elements arranged in a single line is mounted on a substrate 17a, and the substrate 17a is attached at a one side portion of a lens unit 18a. In addition, as the light-emitting elements, other light-emitting elements such as a liquid crystal and so on may be used other than the LED array.

At other side portion of the lens unit 18a, a mirror 19a is provided in a manner that the mirror 19a is inclined at approximately 45 degrees in a top view, and in a rear portion of the mirror 19a, a voice coil motor 20a is provided as a means for reciprocally moving the mirror 19a in a predetermined range. Furthermore, in a rear portion of the voice coil motor 20a, there is provided with a photointerrupter 21a, and a shutter plate 23a formed at a rear end portion of a voice coil 22a is inserted into a slit of the photointerrupter 21a.

Then, if the light-emitting elements included in the LED array 16a are selectively driven for light-emitting in accordance with an instruction from a control portion (not shown) on the basis of picture data to be displayed in the left display unit 15a, a light image according to the picture data is generated by the LED array 16a. The light image is enlarged at a time that the light image is passed through the lens unit 18a, and an enlarged virtual image of the light image is reflected by the mirror 19a.

If the voice coil motor 20a is energed, the voice coil 22a is horizontally swang in left and right directions, and therefore, the mirror 19a is reciprocally moved in the left and right directions in a predetermined range. Accordingly, a reflected image of the light image formed by the LED array 16a in which the plurality of light-emitting elements are arranged in a single line is spread in left and right directions, whereby a two-dimensional field is formed.

Furthermore, at a time that the mirror 19a is reciprocally moved, the shutter plate 23a is also reciprocally moved within the slit of the photointerrupter 21a so as to open or close a light path of the photointerrupter 21a, and therefore, it is possible to detect a moving state of the mirror 19a by the photointerrupter 21a. Then, if a light-emitting timing, i.e. a driving timing of the LED array 16a and a timing of the reciprocally moving of the mirror 19a are controlled by the control portion, a viewer can view the two-dimensional enlarged virtual image formed according to the picture data in the mirror 19a.

In the above, how an image is formed in the left display unit 15a and how the image is viewed by the viewer were described. The right display unit 15b is the same or similar to the left display unit 15a. Therefore, in respective figures, by applying indexes of "a" to respective components for the left display unit 15a and indexes of "b" to respective components for the right display unit 15b, a duplicate description will be omitted.

The enlarged virtual images thus reflected by the mirrors 19a and 19b are viewed by the viewer from a front surface portion of the case 12; however, by displaying a picture for left eye by the left display unit 15a and a picture for right eye by the right display unit 15b, it is possible for the viewer to view a three-dimensional picture with deepness.

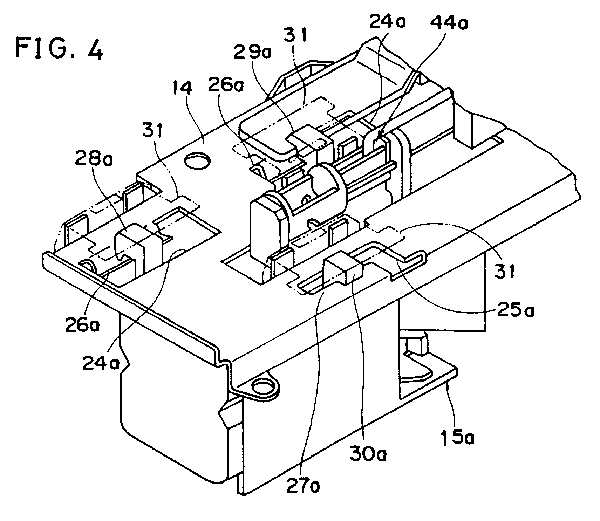

Next, an interval adjustment mechanism for adjusting an interval between the display units 15a and 15b will be described. Figure 4 shows a guide portion at a left side, and notch portions 24a and 24a, and a notch portion 25a are formed on an upper surface of the upper chassis 14, and guide portions 26a and 26a each having a groove of V-letter shape in a side view are formed in one notch portions 24a and 24a, and a flat guide portion 27a is formed at an upper surface portion of the other notch portion 25a. Furthermore, guide pieces 28a and 29a, and 30a are provided above the respective guide portions 26a and 26a, and 27a, and lower surfaces of the guide pieces 28a and 29a are protruded as a convex manner so as to be engaged with the guide portions 26a and 26a having the V-grooves, and a lower surface of the guide piece 30a is engaged with the guide portion 27a having a smooth and flat surface.

Furthermore, plate springs 31 and 31, and 31 (shown by a two-dotted line in Figure 4) each having a reversed L-letter shape in a side view are arranged in vicinities of the notch portions 24a and 24a, and 25a, and the plate springs 31 prevent the guide pieces 28a to 30a from rising, and the guide pieces 28a to 30a are held by the plate springs 31 such that the guide pieces 28a to 30a can be slid in the left and right directions along the guide portions 26a and 27a.

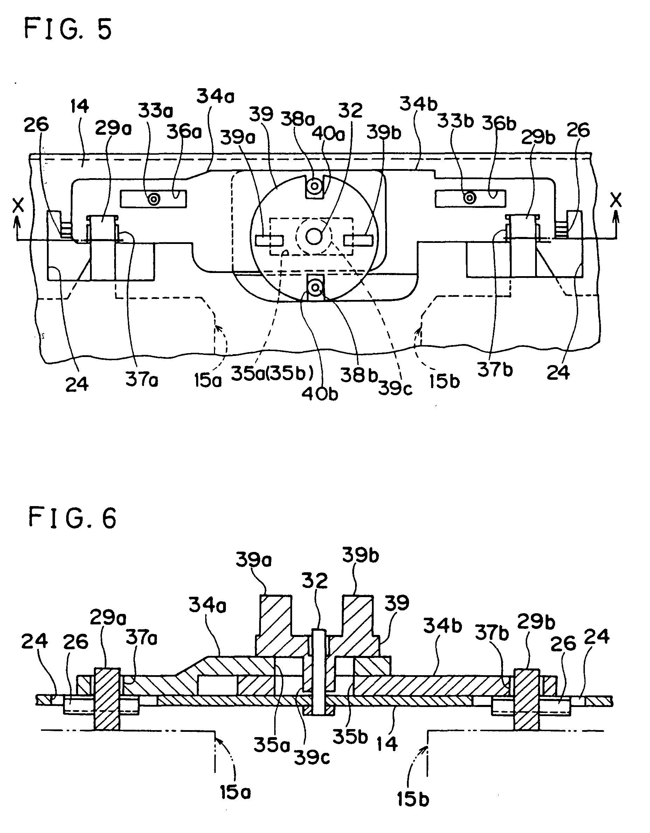

Now, as shown in Figure 5, a shaft 32 is provided at a center portion of the upper surface of the upper chassis 14, and projecting portions 33a and 33b are provided at left and right positions on the upper surface of the upper chassis 14, whereby plate-like links 34a and 34b are provided above the upper chassis 14.

Figure 5 and Figure 6 show a major portion of the links 34a and 34b. Rectangular holes 35a and 35b are formed at center portions of the links 34a and 34b, and the center portions of the links 34a and 34b are superposed with each other, and the shaft 32 is inserted into the rectangular holes 35a and 35b. Furthermore, longitudinal holes 36a and 36b are formed at left and right positions of the links 34a and 34b, and the longitudinal holes 36a and 36b are engaged with the projecting portions 33a and 33b. Furthermore, concaved portions 37a and 37b are formed on the left and right links 34a and 34b, and the guide pieces 29a and 29b projected from the upper surface of the upper chassis 14 are fit to the concaved portions 37a and 37b.

Thus, as shown in Figure 5 and Figure 6, the left and right links 34a and 34b and the guide pieces 29a and 29b are attached to each other, and if the links 34a and 34b are slid in the left and right directions, the guide pieces 29a and 29b coupled to the links 34a and 34b are also slid in the left and right directions, and therefore, the left and right display units 15a and 15b held by the guide pieces 29a and 29b are moved in the left and right directions together with the links 34a and 34b.

Now, pins 38a and 38b are provided in vicinities of the rectangular holes 35a and 35b above the links 34a and 34b. Furthermore, a boss 39c is formed at a center portion on a lower surface of a circular knob 39 with being extended downward, and notch portions 40a and 40b are formed at positions opposite to each other on a peripheral surface of the knob 39. Then, the knob 39 is attached to the shaft 32 while the boss 39c is inserted into the rectangular holes 35a and 35b, and the pins 38a and 38b are engaged with the notch portions 40a and 40b. There are provided with projecting pieces 39a and 39b on an upper surface of the knob 39, and the projecting pieces 39a and 39b are projected from an upper surface of the case 12, whereby the knob 39 can be operated for rotation at an outside of the case 12.

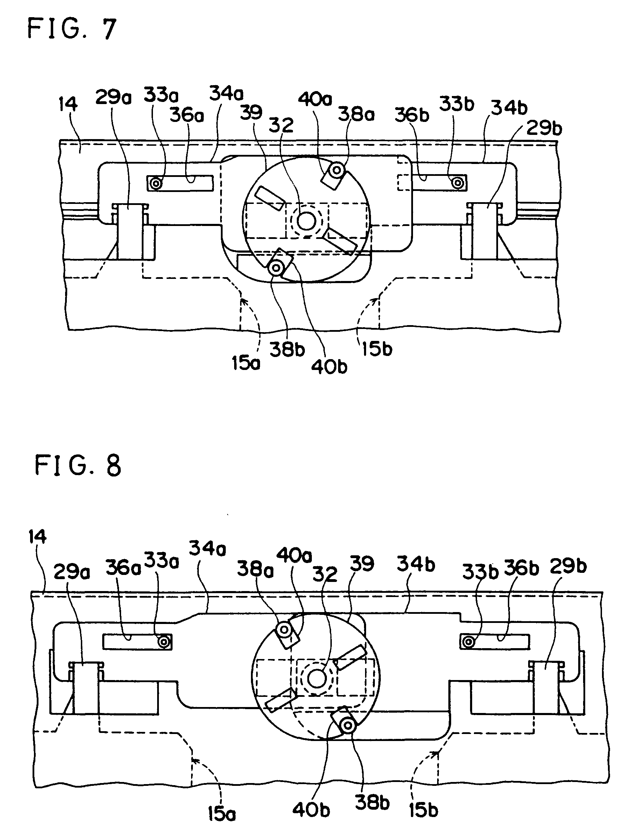

In such an interval adjustment mechanism, if the knob 39 is rotated from a state shown in Figure 5 in a clockwise direction, the pin 38a engaged with one notch portion 40a is depressed in the clockwise direction, and the pin 38b engaged with the other notch portion 40b is depressed in a counterclockwise direction. Therefore, as shown in Figure 7, one link 34a is slid in a right direction so as to make the left display unit 15b to be moved rightward, and the other link 34b is slid in a left direction so as to move the right display unit 15b leftward. That is, the left display unit 15a and the right display unit 15b are symmetrically closed to each other with a constant distance.

In contrast, if the knob 39 is rotated from the state shown in Figure 5 in the counterclockwise direction, in reverse to the above described operation, the pin 38a engaged with the one notch portion 40a is depressed in the counterclockwise direction and the pin 38b engaged with the other notch portion 40b is depressed in the clockwise direction. Therefore, as shown in Figure 8, the link 34a is slid in a left direction so as to move the left display unit 15a leftward, and the link 34b is slid in a right direction so as to move the right display unit 15b rightward. That is, the display units for both eyes 15a and 15b are symmetrically separated from each other with a constant distance.

Thus, by a rotating operation of the knob 39, the left display unit 15a and the right display unit 15b can be symmetrically closed to or separated from each other, and therefore, it is possible to extremely easily and rapidly perform the interval adjustment that the interval between the mirrors 19a and 19b is made to be coincident with the interval of the both eyes of the viewer.

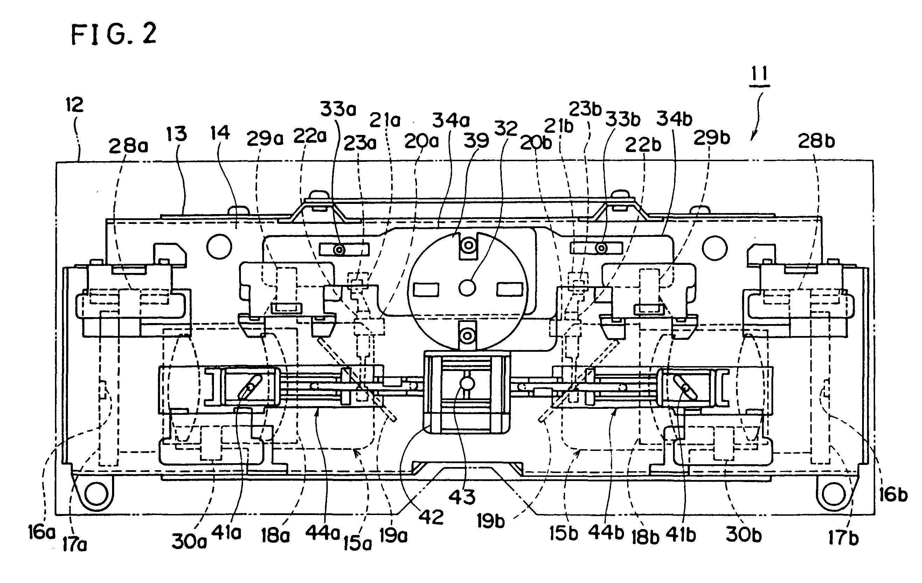

Next, the focusing mechanism for the left display unit 15a and the right display unit 15b will be described. As shown in Figure 1 and Figure 2, the left and right lens units 18a and 18b are provided in the left and right display units 15a and 15b in a manner that the lens units 18a and 18b can be freely moved in left and right directions, and there are formed with focusing pins 41a and 41b on upper surfaces of the lens units 18a and 18b to be extended upward. Furthermore, a holding portion 42 is provided at a center position of the upper surface of the upper chassis 14 and a side of front surface of the knob 39, and a lever 43 is attached to the holding portion 42 in a manner that the lever 43 can be freely rotated in front and rear directions. Then, the lever 43 and the left and right pins 41a and 41b are connected to each other via the universal joints 44a and 44b.

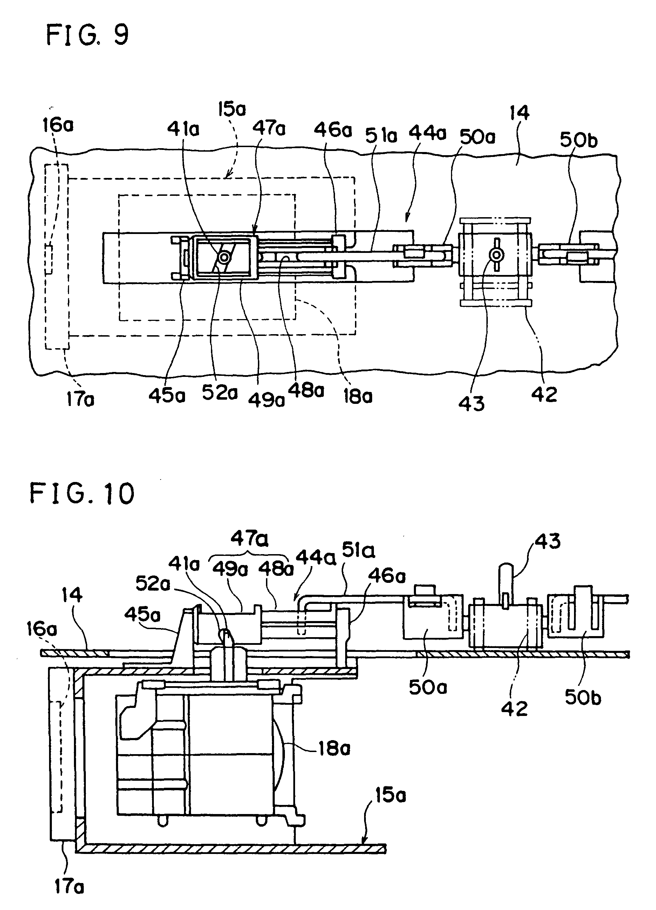

Figure 9 and Figure 10 show the left universal joint 44a. Support pieces 44a and 46a are fixed to an upper portion of the left display unit 15a in a manner that the support pieces 45a and 46a are projected from the upper surfaces of the upper chassis 14, and a rotor 47a is attached between the support pieces 45a and 46a in a manner that the rotor 47a can be freely rotated in the front and rear directions. The rotor 47a is provided with a groove portion 48a and a cylinder cam 49a. On the other hand, an engage portion 50a is provided at a left side of the lever 43, and one end of a connecting rod 51a having a U-letter shape in a front view is inserted into the engage portion 50a from an upper surface of the engage portion 50a such that the engage portion 50a and the connecting rod 51a are fixed to each other, and the other end of the connecting rod 51a is engaged with the groove portion 48a of the rotor 47a.

Since the other end of the connecting rod 51a is engaged with the groove portion 48a, the lever 43 and the rotor 47a are rotated in the front and rear directions; however, since the other end of the connecting rod 51a can be freely slid in the groove portion 48a, the universal joint 44a is expansible or collapsible in left and right directions. Therefore, irrespective of a stop position of the lever 43, the left display unit 15a which supports the rotor 47a can be freely moved in the left and right directions.

Furthermore, a cam groove 52a is formed on a lower surface portion of the cylinder cam 49a, and the cam groove 52a is inclined in a manner that the cam groove 52a is moved to an outside as the cam groove 52a is closed to a direction toward a front surface portion of the upper chassis 14. Then, the focusing pin 41a is projected from the upper surface of the upper chassis 14, and therefore, a tip end of the pin 41a is engaged with the cam groove 52.

In addition, the right universal joint 44b is formed in a symmetrical fashion with respect to the left universal joint 44a.

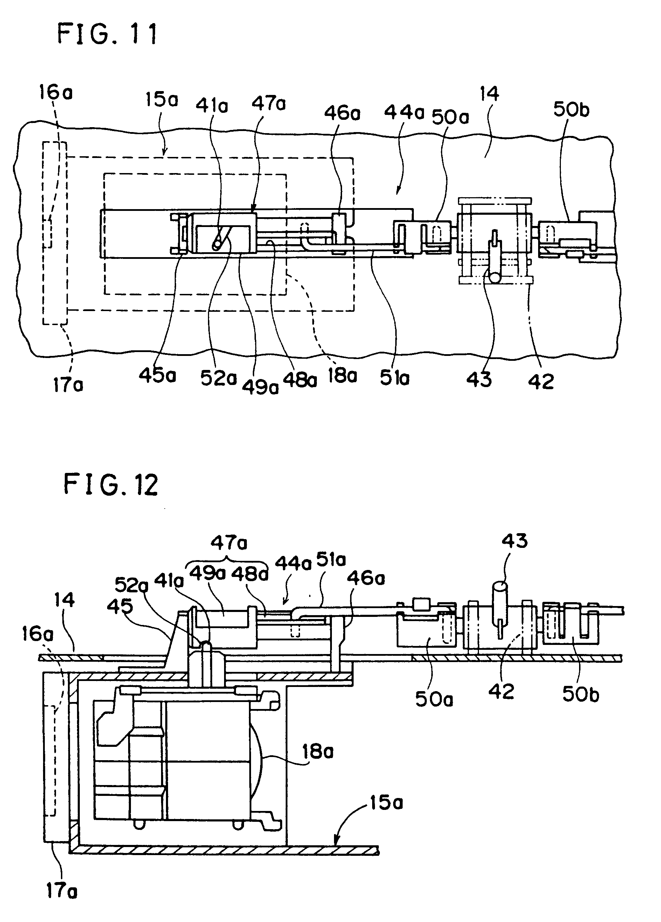

In such the focusing mechanism, as shown in Figure 11 and Figure 12, if the lever 43 projected from the upper surface of the case 12 is rotated to a front direction, the rotors 47a and 47b are also rotated to the front direction via the universal joints 44a and 44b, and therefore, the pins 41a and 41b engaged with the cam grooves 52a and 52b are depressed to an outside in the left and right directions, and therefore, the lens units 18a and 18b are closed to the substrates 17a and 17b, respectively.

Although not shown, if the lever 43 is rotated in a rear direction, the rotors 47a and 47b are also rotated in the rear direction via the universal joints 44a and 44b, and the pins 41a and 41b are depressed to an inside in the left and right directions, and therefore, the lens units 18a and 18b are separated from the substrates 17a and 17b, respectively.

Thus, by rotating the lever 43 in the front and rear directions, the left and right lens units 18a and 18b can be respectively closed to or separated from the substrates 17a and 17b in a symmetry fashion, and therefore, it becomes possible to simultaneously perform the focusing of the both display units 15a and 15b extremely simply.

As described in the above, the left and right focusing pins 41a and 41b are connected to the lever 43 via the universal joints 44a and 44b being expansible or collapsible in the left and right directions, and therefore, even if the rotors 47a and 47b are moved in the left and right directions due to the interval adjustment operation for the left display unit 15a and the right display unit 15b, rotation attitudes of the rotors 47a and 47b are unchanged, and therefore, the pins 41a and 41b are moved together with the display units 15a and 15b, and accordingly, no change in distances between the substrate 17a and 17b and the lens units 18a and 18b occurs. Therefore, even if the interval between the display units 15a and 15b is changed according to the distance between the both eyes of the viewer by operating the knob 39, there is no occasion that the display units 15a and 15b are defocused. Furthermore, even if the focusing operation is performed by operating the lever 43, no change in the interval between the both display units 15a and 15b occurs.

In addition, there are slight dimensional tolerances in respective components such as a lens and etc. in manufacturing the same, and mount errors also occur, and therefore, there is a possibility that the deviation of the focusing (imbalance) occurs in the display units 15a and 15b. Therefore, it is necessary to eliminate such the imbalance in the focusing by finely adjusting the distances between the substrate 17a and 17b and the lens units 18a and 18b at a time that the lens units are mounted.

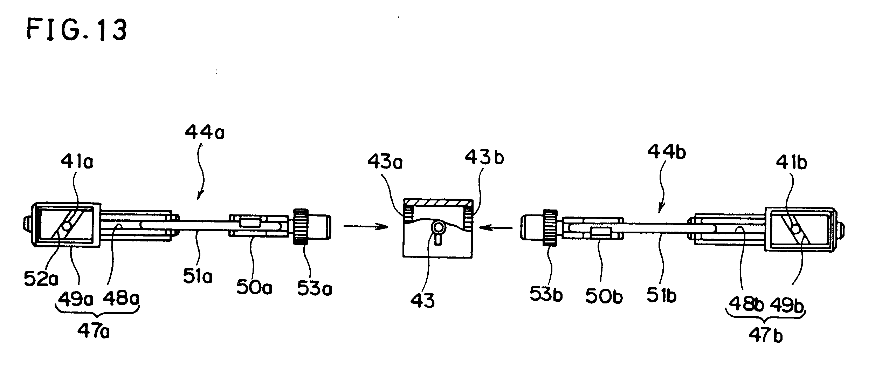

As shown in Figure 13, bosses 53a and 53b being knurled are fixed to end portions of the left and right universal joints 44a and 44b, and the bosses 53a and 53b are inserted into the holes each having an inner peripheral surface being knurled and provided at left and right positions on the lever 43 such that the lever 43 and the universal joints 44a and 44b are coupled to each other. At this time, if one of the left boss 53a and the right boss 53b is fit into the lever 43 with being slightly rotated in a front or rear direction, the universal joints 44a and 44b are connected to the lever 43 in a state where the universal joints 44a and 44b are deviated in the circumferential direction of the lever 43. That is, it is possible to deviate attaching phases of the universal joint 44a and 44b to the lever 43.

For example, in a case where the distance between the left substrate 17a and the left lens unit 18a is to be slightly separated from each other due to the dimensional tolerances of the components, by rotating the left boss 53a, the left universal joint 44a is inclined to the rear direction. Therefore, the left rotor 47a is rotated in the rear direction, and the pin 41a is depressed to the inside in the left and right direction by the cam groove 52a, and therefore, the lens unit 18a is separated from the substrate 17a. In such a state, the left boss 53a is fit into the lever 43, while the right boss 53b is fit into the lever 43 in a state where the right universal joint 44b stands-up with right angle.

In such a case, although the lever 43 is in a neutral position, the distance between the lens unit 18a and the substrate 17a becomes slightly larger than the distance between the lens unit 18b and the substrate 17b, and therefore, the imbalance of the focusing the display units can be solved. That is, in mounting the universal joints 44a and 44b, it is possible to extremely easily adjust the balance of the focusing of the display units. Therefore, the dimensional tolerances of the components such as the lens and etc. may be larger, and therefore, it is possible to reduce a cost.

Although the present invention has been described and illustrated in detail, it is clearly understood that the same is by way of illustration and example only and is not to be taken by way of limitation, the scope of the present invention being limited only by the terms of the appended claims.

## Claims

1. A picture display apparatus, comprising:
a chassis (12),
a left display unit (15a) and a right display unit (15b) arranged in said chassis with an interval in a horizontal direction, each of said left display unit and said right display unit including a plurality of light-emitting elements (16) arranged in a first direction perpendicular to a line of vision of a user, a mirror (19) having an axis in parallel with the first direction so that a reflected image of a virtual image of a light image formed by said plurality of light emitting elements can be viewed therein, and a means (20) for reciprocally moving at a high speed said mirror in a predetermined angular range about the axis;
guide pieces (28,29,30) provided at upper portions of said left display unit and said right display unit, said guide pieces being projected to an outside said chassis; and
a guide portion (26,27) formed on said outside of said chassis and engaged with said guide pieces, wherein
said left display unit and said right display unit can be moved in left and right directions in said chassis while said left display unit and said right display unit are guided by said guide portion and said guide pieces, said respective mirrors of said first display unit and said second display unit being adjustable so as to be faced to a left eye and a right eye of the user depending on positions of the user's eyes.

2. A picture display apparatus according to claim 1, further comprising an interval adjusting means (24-30) which can be operated at said outside of said chassis and makes said left display unit and said right display unit to be closed to or separated from each other.

3. A picture display apparatus according to claim 2, wherein said interval adjusting means includes a pair of links (34) which are arranged on at least one of an upper surface and a lower surface of said chassis in a manner that said links can be slid in left and right directions and to which said left display unit and said right display unit are respectively connected, first pins formed on said links, and a rotatable knob which is operable at at least one of the upper surface and the lower surface of said chassis and connected to said first pins, wherein by rotating said knob, said pair of links are symmetrically moved in left and right directions, whereby said left display unit and said right display unit are closed to or separated from each other.

4. A picture display apparatus according to claim 3, wherein said links are connected to said left display unit and said right display unit by said guide pieces.

5. A picture display apparatus according to claim 3 or 4, wherein said knob includes notches opposite to each other, and said first pins are engaged with said notches.

6. A picture display apparatus according to any one of claims 1 to 5, wherein each of said left display unit and said right display unit includes a lens unit inserted between said light-emitting elements and said mirror.

7. A picture display apparatus according to claim 6, further comprising a focusing means which is operable at an outside of said chassis and performs focusing of said display unit by moving said lens unit in a direction that said lens unit is closed to said light-emitting elements or separated from said light-emitting elements.

8. A picture display apparatus according to claim 7, wherein said focusing means includes a rotatable lever projected from at least one of an upper surface and a lower surface of said chassis, and a moving means for moving second pins provided on said lens units in accordance with rotations of second pins and said lever, and when the lever is rotated, the lens units are moved to be closed or separated from said light-emitting elements.

9. A picture display apparatus according to claim 8, wherein said moving means includes a pair of universal joints connected to said lever at respective one ends and rotated together with said lever, a pair of rotors connected to respective other ends of said universal joints, and cam grooves formed on said rotors, and said second pins are engaged with said cam grooves.

10. A picture display apparatus according to claim 8 or 9, wherein each of said universal joints includes a knurled portion formed on said one end, and said lever includes a hole having an inner peripheral surface being knurled, and said universal joint and said lever are connected to each other by inserting said knurled portion into said hole.

## Patentansprüche

1. Bildanzeigevorrichtung, welche aufweist:
ein Gehäuse (12);
eine linke Anzeigeeinheit (15a) und eine rechte Anzeigeeinheit (15b), welche mit einem Abstand in horizontaler Richtung in dem Gehäuse angeordnet sind, wobei jedes der linken Anzeigeeinheit und der rechten Anzeigeeinheit aufweist eine Mehrzahl an lichtemittierenden Elementen (16), welche in einer ersten Richtung senkrecht zur Blickrichtung eines Nutzers angeordnet sind, einen Spiegel (19) mit einer parallel zur ersten Richtung ausgerichteten Achse, damit das reflektierte Bild eines virtuellen Bildes eines Lichtbildes, welches von der Mehrzahl an lichtemittierenden Elementen erzeugt wird, darin betrachtet werden kann, und eine Einheit (20) zur reziproken Bewegung des Spiegels mit hoher Geschwindigkeit innerhalb eines vorbestimmten Winkelbereiches um die Achse herum;
Führungsstücke (28, 29, 30) vorgesehen an oberen Abschnitten der linken Anzeigeeinheit und der rechten Anzeigeeinheit, wobei die Führungsstücke in Richtung einer Außenseite des Gehäuses überstehen; und
einen Führungsabschnitt (26, 27) erzeugt auf der Außenseite des Gehäuses und im Eingriff mit den Führungsstücken stehend, wobei die linke Anzeigeeinheit und die rechte Anzeigeeinheit in eine linke und eine rechte Richtung in dem Gehäuse bewegt werden können, während die linke Anzeigeeinheit und die rechte Anzeigeeinheit mittels des Führungsabschnitts und der Führungsstücke geführt werden, und die entsprechenden Spiegel der ersten Anzeigeeinheit und der zweiten Anzeigeeinheit derart einjustiert werden können, dass sie in Abhängigkeit von der Augenposition eines Nutzers einem linken Auge und einem rechten Auge des Nutzers gegenüber stehen.

2. Bildanzeigevorrichtung gemäß Anspruch 1, welche weiterhin aufweist eine Abstandsjustiereinheit (24-30), welche auf der Außenseite des Gehäuses betätigt werden kann und es ermöglicht, dass die linke Anzeigeeinheit und die rechte Anzeigeeinheit aufeinander zu bewegt oder separiert werden können.

3. Bildanzeigevorrichtung gemäß Anspruch 2, bei welcher die Abstandsjustiereinheit aufweist ein Paar von Verbindungsgliedern (34), welche derart auf mindestens einer der oberen Oberfläche und der unteren Oberfläche des Gehäuses angeordnet sind, dass die Verbindungsglieder in die linke und rechte Richtung verschoben werden können, und an welche die linke Anzeigeeinheit und die rechte Anzeigeeinheit entsprechend montiert sind, auf den Verbindungsgliedern hergestellte erste Stifte und einen rotierbaren Knopf, welcher von mindestens einer der oberen Oberfläche und der unteren Oberfläche des Gehäuses bedient werden kann und mit den ersten Stiften verbunden ist, wobei mittels einer Rotation des Knopfes das Paar von Verbindungsgliedern symmetrisch in die linke und rechte Richtung bewegt werden, wodurch die linke Anzeigeeinheit und die rechte Anzeigeeinheit aufeinander zu bewegt oder separiert werden.

4. Bildanzeigevorrichtung gemäß Anspruch 3, bei welcher die Verbindungsglieder mittels den Führungsstücken mit der linken Anzeigeeinheit und der rechten Anzeigeeinheit verbunden sind.

5. Bildanzeigevorrichtung gemäß Anspruch 3 oder 4, bei welcher der Knopf gegeneinander ausgerichtete Kerben aufweist, und bei welcher die ersten Stifte mit den Kerben im Eingriff stehen.

6. Bildanzeigevorrichtung gemäß einem der Ansprüche 1 bis 5, bei welcher jedes der linken Anzeigeeinheit und der rechten Anzeigeeinheit eine zwischen den lichtemittierenden Elementen und dem Spiegel eingefügte Linseneinheit aufweist.

7. Bildanzeigevorrichtung gemäß Anspruch 6, weiter aufweisend eine Fokussierungseinheit, welche von einer Außenseite des Gehäuses bedient werden kann und welche eine Fokussierung der Anzeigeeinheit mittels einer Bewegung der Linseneinheit in einer Richtung ermöglicht, in welcher die Linseneinheit auf die lichtemittierenden Elemente zu bewegt oder von den lichtemittierenden Elementen separiert wird.

8. Bildanzeigevorrichtung gemäß Anspruch 7, bei welcher die Fokussierungseinheit aufweist einen rotierbaren Hebel, welcher über mindestens eine der oberen Oberfläche und der unteren Oberfläche des Gehäuses übersteht, und eine Bewegungseinheit zum Bewegen von zweiten Stiften, welche auf den Linseneinheiten entsprechend Rotationen von zweiten Stiften und dem Hebel vorgesehen sind, und wenn der Hebel rotiert wird, werden die Linseneinheiten auf die lichtemittierenden Elemente zu bewegt oder von diesen separiert.

9. Bildanzeigevorrichtung gemäß Anspruch 8, bei welcher die Bewegungseinheit aufweist ein Paar von Universalgelenken, welche mit dem Hebel an einem entsprechenden Ende verbunden sind und mit dem Hebel rotieren, einem Paar von Rotoren, welche mit dem entsprechenden anderen Ende der Universalgelenke verbunden sind, und auf den Rotoren erzeugte Schlosskanäle, wobei die zweiten Stifte im Eingriff mit diesen Schlosskanälen stehen.

10. Bildanzeigevorrichtung gemäß Anspruch 8 oder 9, bei welcher jedes der Universalgelenke einen auf dem einen Ende erzeugten gerändelten Abschnitt aufweist, bei welcher der Hebel ein Loch mit einer gerändelten inneren Randoberfläche aufweist, und bei welcher das Universalgelenk und der Hebel mittels Einbringung des gerändelten Abschnitts in das Loch miteinander verbunden werden.

## Revendications

1. Dispositif d'affichage d'images, comprenant :
un châssis (12) ;
une unité gauche d'affichage (15a) et une unité droite d'affichage (15b) disposées dans ledit châssis avec un intervalle dans une direction horizontale, chacune desdites unités gauche d'affichage et droite comprenant une pluralité d'éléments (16) émetteurs de lumière disposés dans une première direction perpendiculaire à une ligne de vision d'un utilisateur, un miroir (19) ayant un axe parallèle à la première direction de façon qu'une image réfléchie d'une image virtuelle d'une image lumineuse formée par ladite pluralité d'éléments émetteurs de lumière puisse y être vue, et des moyens (20) pour déplacer alternativement à grande vitesse ledit miroir dans une plage angulaire prédéterminée autour de l'axe ;
des pièces de guidage (28,29,30) prévues aux parties supérieures de ladite unité gauche d'affichage et de ladite unité droite d'affichage, lesdites pièces de guidage faisant saillie vers et à l'extérieur dudit châssis ; et
une partie de guidage (26,27) formée sur ledit côté extérieur dudit châssis et qui s'engage avec lesdites pièces de guidage, dans lequel
ladite unité gauche d'affichage et ladite unité droite d'affichage peuvent être déplacées dans les directions gauche et droite dans ledit châssis tandis que ladite unité gauche d'affichage et ladite unité droite d'affichage sont guidées par ladite partie de guidage et lesdites pièces de guidage, lesdits miroirs respectifs de ladite première unité d'affichage et de ladite seconde unité d'affichage pouvant être ajustés de façon à faire face à l'oeil gauche et à l'oeil droit de l'utilisateur suivant les positions des yeux de l'utilisateur.

2. Dispositif d'affichage d'images selon la revendication 1, comprenant en outre des moyens (24-30) d'ajustement d'intervalle qui peuvent être actionnés sur ledit côté extérieur dudit châssis et permettent de rapprocher ou de séparer l'une de l'autre ladite unité gauche d'affichage et ladite unité droite d'affichage.

3. Dispositif d'affichage d'images selon la revendication 2, dans lequel lesdits moyens d'ajustement d'intervalle comprennent une paire de pièces de liaison (34) qui sont disposées sur au moins la surface supérieure ou la surface inférieure dudit châssis de telle manière que lesdites pièces de liaison puissent coulisser dans les directions gauche et droite et auxquelles pièces sont respectivement reliées ladite unité gauche d'affichage et ladite unité droite d'affichage, des premières goupilles formées sur lesdites pièces de liaison, et un bouton tournant pouvant être actionné d'au moins la surface supérieure ou la surface inférieure dudit châssis et qui est relié auxdites premières goupilles, où en tournant ledit bouton, ladite paire des pièces de liaison sont déplacées symétriquement dans les directions gauche et droite, grâce à quoi ladite unité gauche d'affichage et ladite unité droite d'affichage sont rapprochées ou séparées l'une de l'autre.

4. Dispositif d'affichage d'images selon la revendication 3, dans lequel lesdites pièces de liaison sont reliées à ladite unité gauche d'affichage et à ladite unité droite d'affichage par lesdites pièces de guidage.

5. Dispositif d'affichage d'images selon la revendication 3 ou 4, dans lequel ledit bouton comprend des encoches opposées les unes aux autres, et lesdites premières goupilles s'engagent avec lesdites encoches.

6. Dispositif d'affichage d'images selon l'une quelconque des revendications 1 à 5, dans lequel chacune de ladite unité gauche d'affichage et de ladite unité droite d'affichage comprend une unité de lentille insérée entre lesdits éléments émetteurs de lumière et ledit miroir.

7. Dispositif d'affichage d'images selon la revendication 6, comprenant en outre des moyens de focalisation qui peuvent être actionnés à l'extérieur dudit châssis et réalisent la focalisation de ladite unité d'affichage en déplaçant ladite unité de lentille dans une direction telle que ladite unité de lentille est rapprochée desdits éléments émetteurs de lumière ou séparée desdits éléments émetteurs de lumière.

8. Dispositif d'affichage d'images selon la revendication 7, dans lequel lesdits moyens de focalisation comprennent un levier rotatif qui fait saillie à partir d'au moins la surface supérieure ou la surface inférieure dudit châssis, et des moyens pour déplacer des secondes goupilles prévues sur lesdites unités de lentille en conformité avec les rotations des secondes goupilles et dudit levier, et où lorsque le levier est tourné, les unités de lentille sont déplacées pour se rapprocher ou se séparer desdits éléments émetteurs de lumière.

9. Dispositif d'affichage d'images selon la revendication 8, dans lequel lesdits moyens de déplacement comprennent une paire de joints universels reliés audit levier aux premières extrémités respectives et entraînés en rotation avec ledit levier, une paire de rotors étant reliée aux autres extrémités respectives desdits joints universels, et des cames en creux formées sur lesdits rotors, et lesdites secondes goupilles viennent s'engager avec lesdites cames en creux.

10. Dispositif d'affichage d'images selon la revendication 8 au 9, dans lequel chacun desdits joints universels comprend une partie moletée formée sur ladite première extrémité, et ledit levier comprend un trou présentant une surface périphérique intérieure moletée, et le ledit joint universel et ledit levier sont reliés l'un à l'autre par introduction de ladite partie moletée dans ledit trou.
